# EUROPÄISCHE PATENTSCHRIFT

(11) **EP 2 877 437 B1**
(45) Veröffentlichungstag und Bekanntmachung des Hinweises auf die Patenterteilung: **15.08.2018**
(21) Anmeldenummer: 13725340.7
(22) Anmeldetag: 23.05.2013
(51) Int. Cl.: C04B 35/624, C04B 35/63, C04B 35/66, C04B 35/043, F27D 1/00

(54) **FEUERFESTES ERZEUGNIS UND VERWENDUNG DES ERZEUGNISSES**
REFRACTORY PRODUCT AND USE OF THE REFRACTORY PRODUCT
PRODUIT REFRACTAIRE ET UTILISATION DU PRODUIT REFRACTAIRE

(30) Priorität: 27.07.2012 DE 102012015026
(43) Veröffentlichungstag der Anmeldung: 03.06.2015
(73) Patentinhaber: Refratechnik Holding GmbH, 85737 Ismaning (DE)
(72) Erfinder: JANSEN, Helge, 37133 Friedland (DE)
(74) Vertreter: Patent- und Rechtsanwälte Dr. Solf & Zapf
(86) Internationale Anmeldenummer: PCT/EP2013/060572
(87) Internationale Veröffentlichungsnummer: WO 2014/016010

(56) Entgegenhaltungen:
- CN-A- 101 328 070
- CN-A- 101 607 826
- JP-A- S 495 407
- US-A- 4 497 901

## Beschreibung

Die Erfindung betrifft ein trockenes Gemisch für ein feuerfestes Erzeugnis nach ISO/R 836, DIN 51060, in Form eines ungeformten oder geformten Versatzes, der in situ in hohem Maße widerstandsfähig ist gegen den Angriff fayalitischer Schlacken (Eisensilikatschlacken) und Sulfaten und beständig gegen geschmolzene Buntmetalle, insbesondere gegen Kupferschmelze ist. Die Erfindung betrifft zudem einen das trockene Gemisch enthaltenden feuerfesten Versatz sowie besondere Verwendungen des Versatzes.

Fayalitische Schlacken entstehen z.B. bei der Herstellung von Kupfer aus Kupferkies (CuFeS₂). Kupferkies wird geröstet, woraus sogenannter Kupferstein resultiert enthaltend Kupfersulfid (Cu₂S) und Eisenverbindungen, z.B. FeS und Fe₂O₃. Der Kupferstein wird zu Rohkupfer weiterverarbeitet, wobei glutflüssiger Kupferstein unter Luftzufuhr und Zusatz von SiO₂, z.B. in Form von Quarz in einem Konverter behandelt wird. Dabei entsteht eine fayalitische Schlacke, die hauptsächlich das Mineral Fayalit (2FeO·SiO₂) enthält und Rohkupferoxid (Cu₂O).

Man kleidet derzeit die Konverter zur Herstellung von Rohkupfer, z.B. einen Pierce-Smith-Konverter, feuerseitig hauptsächlich mit gebrannten Magnesiachromiterzeugnissen aus (z.B. DE 14 71 231 A1). Diese feuerfesten Erzeugnisse widerstehen aber dabei nur ungenügend dem Angriff von Sulfaten, die aus der Oxidation der Sulfide z.B. in Form von Magnesiumsulfat resultieren. Magnesiachromitsteine haben außerdem nur begrenzte bzw. ungenügende Hochtemperatur-Antiwetting-Eigenschaften und sie weisen einen ungenügenden Penetrationswiderstand gegen heiße Buntmetall- insbesondere Kupferschmelzen auf.

Magnesiachromitsteine werden auch in Schmelzaggregaten für die Erzeugung anderer Nichteisenmetalle (Buntmetalle wie Ni, Pb, Sn, Zn) eingesetzt und ergeben dort gleich gelagerte Probleme.

Aus der DE 100 54 125 A1 ist ein Versatz bekannt, insbesondere zum Herstellen eines feuerfesten Formkörpers, dessen Komponenten im Wesentlichen im Dreistoffsystem MgO-Al2O3-SiO2 liegen. Der Versatz enthält zumindest eine relativ grobkörnige Resistorkornkomponente, deren Zusammensetzung im Bereich des Zusammensetzungsdreiecks Periklas (MgO)-Spinell (MgAl2O4)-Forsterit (Mg2SiO4) einschließlich der Konoden liegt, sowie einen Schmelzphasenbildner, dessen Zusammensetzung im Dreistoffsystem MgO-Al2O3-SiO2, jedoch außerhalb des Zusammensetzungsdreiecks Periklas (MgO)-Spinell (MgAl2O4)-Forsterit (Mg2SiO4), liegt, sowie eine feinkörnige feuerfeste Komponente einer Zusammensetzung, die im Dreistoffsystem MgO-Al2O3-SiO2 liegt und unter Einsatzbedingungen im Wesentlichen nicht mit der aus dem Schmelzphasenbildner gebildeten Schmelze reagiert. Beispielsweise kann Sinter- und/oder Schmelzmagnesia und/oder Sinter-/Schmelzspinell und/oder Forsterit (insbesondere in Form von Olivin) sowie jede beliebige Kombination dieser Rohstoffe die Resistorkomponente ausbilden.

Die DE 31 27 556 A1 offenbart ein feuerfestes Dichtungsmaterial mit Mischwerten von 50 bis 90 Gew.-% an feuerfesten Füllstoffen mit einer Teilchengröße von weniger als 0,1 mm, bezogen auf den Trockengehalt, 1 bis 10 Gew.-% an faserartigen Feuerfestmaterialien und 9 bis 50 Gew.-% Plastifizierungsmittel, wobei das Gemisch in Form von Platten oder Folien nach der Zugabe einer geeigneten Menge an Flüssigkeit verformt worden ist. Bei dem feuerfesten Füllstoff kann es sich um Olivin handeln.

Die DE 10 2006 007 781 A1 betrifft einen grobkeramischen feuerfesten Versatz überwiegend aufweisend mindestens eine körnige, feuerfeste, mineralische, basische Hauptkomponente aus einem auf mindestens einem basischen feuerfesten Grundstoff basierenden MgO- oder MgO- und CaO-basierenden feuerfesten Werkstoff, und aufweisend mindestens einen körnigen, feuerfesten, mineralischen, MgO-basierten, elastifizierenden Zusatzstoff in Form eines Forsteritwerkstoffs oder Forsteritwerkstoff bildenden Gemenges, vorzugsweise als geformte Körperchen, wie Pellets, oder aus Presslingen zerkleinertes Granulat, mit Korngrößen von 0,3 bis 8 mm, die zweckmäßigerweise ein Bindemittel aufweisen, in die Hauptkomponente elastifizierender Menge. Der elastifizierende Zusatzstoff besteht aus dem Mineral Olivin und/oder dem Mineral Forsterit und/oder einem Forsteritmaterial oder aus einem Gemenge, das unter Temperatureinwirkung in situ Forsterit und/oder Forsteritmaterial bildet, und liegt in Mengen von 3 bis 30 Gew.-%, bezogen auf die Summe Elastifizierer plus Hauptkomponente vor.

In der US 4,497,901 A ist ein Forsterit-Kohlenstoff-Feuerfestmaterial offenbart, das im Wesentlichen aus 5 bis 50 Gew.-% Forsteritmaterial, 5 bis 30 Gew.-% kohlenstoffhaltigem Material, 0,5 bis 10 Gew.-% Siliciumcarbid und Magnesiumoxid-Feuerfestmaterial besteht.

Aufgabe der Erfindung ist, ein trockenes Gemisch für ein feuerfestes Erzeugnis zu schaffen, das gute Antiwetting-Eigenschaften gegen Buntmetallschmelzen, insbesondere gegen Kupferschmelze, hat, einen verbesserten Penetrationswiderstand gegen fayalitische Schlacken aufweist und einem Sulfatangriff bei Einsatztemperaturen besser widersteht als die auf diesem Feuerfestsektor bisher verwendeten feuerfesten Erzeugnisse, sowie ein derartiges feuerfestes Erzeugnis enthaltend das trockene Gemisch bereitzustellen.

Die Aufgabe der Erfindung wird durch ein trockenes Gemisch mit den Merkmalen des Anspruchs 1 gelöst. Die weitere Aufgabe der Erfindung wird durch einen feuerfesten Versatz gemäß Anspruch 13 gelöst, der hauptsächlich (über 90 Gew.-%) aus dem trockenen Gemisch bzw. Trockenstoffgemisch aus Olivinrohstoff, Magnesia (MgO) und Siliciumcarbid (SiC) sowie einem flüssigen Bindemittel in Form eines Kieselsols (SiO₂) ausgebildet ist.

Der natürlich vorkommende, auf dem Markt erhältliche Olivinrohstoff wird erfindungsgemäß als Granulat eingesetzt und soll erfindungsgemäß möglichst 100 Gew.-%, mindestens jedoch 70 Gew.-% des Minerals Forsterit aufweisen. Der Rest kann das Mineral Fayalit und/oder können andere bekannte Verunreinigungen wie Enstatit und/oder Monticellit und/oder Merwinit sein. Es liegt im Rahmen der Erfindung, einen synthetisch hergestellten, reinen Forsteritwerkstoff allein oder in Kombination mit einem Olivinrohstoff zu verwenden. Soweit im Folgenden von Olivinrohstoff die Rede ist, betrifft dies auch den synthetischen Forsteritwerkstoff.

Die verwendete Korngröße des Olivinrohstoffgranulats liegt im Grobkornbereich z.B. zwischen 0,1 und 6, insbesondere zwischen 1 und 6 mm, wobei das Granulat z.B. eine Gaußsche Kornverteilung aufweist.

Der Olivinrohstoff wird in Mengen zwischen 30 und 60 Gew.-%, insbesondere zwischen 40 und 50 Gew.-%, im erfindungsgemäßen Gemisch eingesetzt.

Magnesia (MgO) wird in Mehlform bzw. Pulverform mit Korngrößen 100 Gew.-% ≤ 1 mm verwendet. Als Magnesia wird z.B. Schmelzmagnesia und/oder Sintermagnesia und/oder synthetische totgebrannte oder kaustische Magnesia eingesetzt. (Die Begriffe "Mehl" und "Pulver" werden im Rahmen der Erfindung als gleiche Begriffe mit gleichem Begriffsinhalt verstanden.)

Der MgO-Gehalt der Magnesia soll vorzugsweise > 90 Gew.-%, insbesondere > 95 Gew.-% betragen. Der Rest sind übliche Verunreinigungen wie Silikate und/oder Eisenoxid.

Die MgO-Mehle weisen z.B. ebenfalls eine Gaußsche Kornverteilung auf.

Das MgO-Mehl wird im trockenen Gemisch in einer Menge von mindestens 35 Gew.-%, vorzugsweise in Mengen zwischen 35 und 50, insbesondere zwischen 40 und 45 Gew.-%, verwendet.

Siliciumcarbid (SiC) ist auf dem Markt als synthetisches Produkt mit hohem Reinheitsgrad und in verschiedenen Körnungen und Kornverteilungen erhältlich und wird erfindungsgemäß in Pulverform bzw. in Mehlform erfindungsgemäß mit Korngrößen 100 Gew.-% ≤ 1 mm verwendet. Die Korngrößenverteilung entspricht vorzugsweise einer Gaußschen Kornverteilung.

Das SiC-Pulver wird z.B. mit einer Reinheit von > 90 Gew.-%, insbesondere > 94 Gew.-% an SiC eingesetzt. Die verwendete Menge im trockenen Gemisch liegt bei mindestens 5 Gew.-%, vorzugsweise zwischen 5 und 20, insbesondere zwischen 10 und 15 Gew.-%.

Außerdem kann das sich auf 100 Gew.-% zusammenzustellende trockene Gemisch optional im Gemisch mindestens eine mehlförmige bzw. feinteilige, trockene Kieselsäure-Komponente (SiO₂) bis 10, insbesondere bis 5 Gew.-% enthalten. Diese SiO₂-Komponente hoher Reinheit bezüglich SiO₂ kann z.B. auf dem Markt erhältliches Mikrosilika und/oder eine pyrogene und/oder eine gefällte Kieselsäure sein. Des Weiteren kann das trockene Gemisch bis zu 10, insbesondere bis zu 5 Gew.-% Antioxidantien und/oder andere übliche Zusatzmittel für Feuerfesterzeugnisse enthalten, wobei aber das Mengenverhältnis des sich aus den obigen Mengen für Olivin, MgO und SiC ergibt, erhalten bleiben soll. Dies gilt auch für den optionalen Zusatz der trockenen Kieselsäure.

Dem zu 100 Gew.-% errechneten erfindungsgemäßen oben beschriebenen, trockenen Gemisch wird erfindungsgemäß ein flüssiges Bindemittel in Form eines möglichst bzw. weitestgehend alkalifreien Kieselsols beigemengt. Der Alkaligehalt des Kieselsols sollte z.B. unter 1 Gew.-%, insbesondere unter 0,5 Gew.-% liegen. Das feuchte Gemenge aus dem feuerfesten nur Feststoffe enthaltenden trockenen Gemisch und dem flüssigen Bindemittel ist ein feuerfester Versatz, der als ungeformtes, feuerfestes Erzeugnis zum Auskleiden von Schmelzaggregaten wie Schmelzkonvertern für Buntmetalle verwendbar ist, oder aus dem durch Pressen geformte, ungebrannte und gebrannte feuerfeste Erzeugnisse herstellbar sind, mit denen die genannten Schmelzaggregate ausgekleidet werden können.

Kieselsole sind bekanntlich Kieselsäure-Aquasole in Form von kolloiddispersen Lösungen von Kieselsäure in Wasser. Man unterscheidet zwischen kolloiden Dispersionen von hochmolekularen Polykieselsäuren und kolloiden Dispersionen von amorphen Siliciumdioxidpartikeln mit Teilchengrößen im Nanometerbereich (nm-Bereich). Nach der Erfindung werden vorzugsweise Kieselsole in Form von kolloiden Dispersionen aus amorphen Siliciumdioxidpartikeln verwendet mit SiO₂-Konzentrationen z.B. zwischen 15 und 50, insbesondere zwischen 20 und 40 Gew.-%. In diesen wässrigen kolloiddispersen Lösungen liegen die amorphen Siliciumdioxidpartikel in Form von untereinander unvernetzten, kugelförmigen Einzelpartikeln vor, die an der Oberfläche hydroxyliert sind. Die Größe der Partikel liegt im kolloiden Bereich. Die durchschnittliche Partikelgröße liegt i. d. R. zwischen 5 und 75 nm.

Gehandelt werden diese alkalifreien bzw. alkaliarmen Kieselsole in Form von nicht entmischenden niedrigviskosen Flüssigkeiten.

Geeignet als Bindemittel für die Zwecke der Erfindung sind insbesondere diese Kieselsole mit spezifischen Oberflächen der SiO₂-Partikel zwischen 100 und 400, insbesondere zwischen 200 und 300 m²/g und SiO₂-Feststoffkonzentrationen zwischen 15 und 50, insbesondere zwischen 20 und 40 Gew.-%.

Kieselsole werden erfindungsgemäß in Mengen zwischen 2 und 10, insbesondere zwischen 3 und 6 Gew.-% dem trockenen Gemisch zugesetzt. Die Wassermenge der Kieselsole dient dabei hauptsächlich dazu, eine vorbestimmte Plastizität bzw. Bildsamkeit des Versatzgemenges für die Verarbeitbarkeit einzustellen. Die Siliciumdioxidpartikel des Kieselsols erfüllen hauptsächlich die Aufgabe, über eine verfestigende Gelierung im Versatz und durch nachfolgende Trocknung des Versatzes die Bindung der Mischungsbestandteile zu gewährleisten. Bei Einwirkung hoher Temperaturen in situ verstärkt sich diese Bindung durch Reaktionen der Bindungsphasen mit den basischen Bestandteilen der Mischung.

Ein erfindungsgemäßes Erzeugnis wird hergestellt, indem aus den Trockenstoffen Olivinrohstoff, Magnesia, SiC und gegebenenfalls der trockenen Kieselsäure und dem flüssigen Kieselsol-Bindemittel mit geeigneten Mischern ein homogenes Versatzgemenge mit vorgegebener Verarbeitbarkeit erzeugt wird.

Diese bildsame Masse eines feuerfesten Versatzes kann zur Auskleidung von Schmelzkonvertern verwendet werden. Aus dem Versatz können aber auch geformte Steine durch Pressen erzeugt werden, die ihrerseits getrocknet und ungebrannt oder keramisch gebrannt zur Auskleidung von Schmelzkonvertern verwendet werden können. Gleichermaßen kann ein erfindungsgemäßer Versatz zu Vibrationsmassen oder Gießmassen oder dergleichen verarbeitet und als solche verwendet werden.

Die Erfindung geht somit von einem trockenen Gemisch ausschließlich aus oder hauptsächlich (über 90 Gew.-%) aus Olivingranulat, MgO-Mehl und SiC-Mehl und ggf. einer feinteiligen, trockenen SiO₂-Komponente, wie z.B. Mikrosilika aus.

Die Erfindung betrifft außerdem einen feuerfesten Versatz, bestehend aus einer bestimmten Menge des trockenen Gemisches und einer bestimmten auf die Menge des Gemisches abgestimmten Menge eines Kieselsols. Der Versatz wird zweckmäßigerweise in Form eines Gebindes mit zwei Behältnissen auf den Markt gebracht, wobei in dem einen Behältnis die Mischung aus den Trockenstoffen und in dem anderen Behältnis das flüssige Kieselsol enthalten ist. Bei einer bestimmungsgemäßen Verwendung eines Gebindes werden die Inhalte der Behältnisse lediglich noch gemischt. Alternativ kann der feuchte Versatz in einem abgeschlossenen Behältnis vorgemischt gehandelt werden.

Es liegt zudem im Rahmen der Erfindung, aus einem oben angegebenen Kieselsol enthaltenden wasserhaltigen Versatzgemenge durch Pressen mittels Steinpressen gepresste Formkörper herzustellen und bis auf Restfeuchten vorzugsweise zwischen 0,1 und 2 Gew.-% die Formkörper zu trocknen oder die Formkörper nach einer weiteren Ausführungsform der Erfindung zu trocknen und keramisch in einem keramischen Brennofen zu brennen bei Temperaturen zwischen vorzugsweise 1000 und 1300, insbesondere zwischen 1150 und 1250°C in oxidierender Atmosphäre für eine Zeitdauer vorzugsweise zwischen 4 und 8, insbesondere zwischen 5 und 6 Stunden. Die Brennbedingungen werden dabei erfindungsgemäß so gewählt, dass die trockenen und getrockneten Bestandteile des Versatzes während des Brennens möglichst nicht oder nur zu einem geringen Anteil miteinander reagieren, damit die trockenen und getrockneten Gemengebestandteile in situ im Konverter beim Angriff einer Schmelze und/oder Schlacke für die erfindungsgemäße Gewährleistung der Feuerfestigkeit durch insbesondere eine Antiwettingwirkung und eine chemische Wechselwirkung mit Schlackenbestandteilen zur Verfügung stehen.

Mit den ungebrannten und gebrannten erfindungsgemäßen Massen und Formkörpern können Auskleidungen von Buntmetallschmelzkonvertern erstellt werden, die den bisherigen Auskleidungen bezüglich Feuerfestigkeit und Beständigkeit überlegen sind. Insbesondere zeigt sich die Überlegenheit der erfindungsgemäßen feuerfesten Erzeugnisse in Kupferschmelzkonvertern, z.B. in einem Pierce-Smith-Konverter (PS-Konverter).

Die ungebrannten gepressten getrockneten Formkörper weisen z.B. die folgenden Eigenschaften auf:

| | |
|---|---|
| Rohdichte: | 2,6 bis 2,7 kg/m³ |
| Druckfestigkeit: | 25 bis 50, insbesondere 35 bis 45 MPa |

Die gebrannten erfindungsgemäßen Formkörper weisen z.B. die folgenden Eigenschaften auf:

| | |
|---|---|
| Rohdichte: | 2,55 bis 2,65 kg/m³, |
| Druckfestigkeit: | 30 bis 55, insbesondere 40 bis 50 MPa |

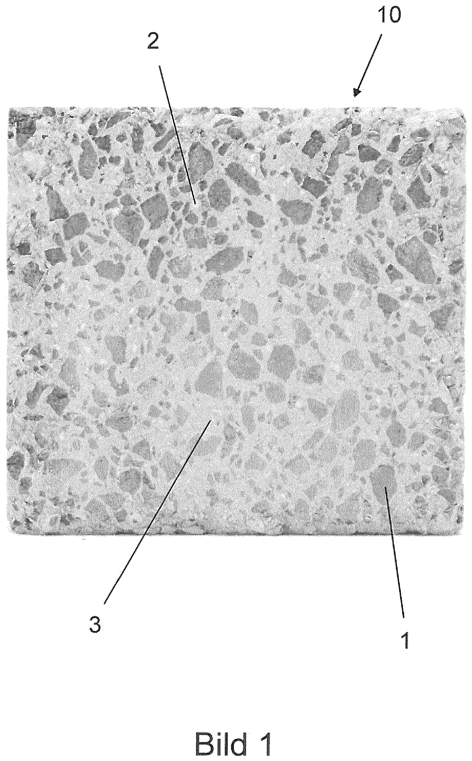

Die Erfindung wird im Folgenden anhand der Bilder 1 bis 7 verdeutlicht.

Bild 1 zeigt die Frontansicht eines diagonal aufgesägten, gepressten, ungebrannten erfindungsgemäßen feuerfesten Steins (FSM-Stein) hergestellt aus der folgenden Rezeptur:

| | | FSM-Stein | |
|---|---|---|---|
| Rohstoff | Kornfraktion mm | Menge % | Menge [kg] |
| Olivin | 2-4 | 30 | 0,930 |
| Olivin | 1-2 | 15 | 0,465 |
| Nedmag 99 HD (MgO) | 0-1 | 20 | 0,620 |
| Nedmag 99 HD (MgO) | Mehl | 20 | 0,775 |
| Mikrosilika | Mehl | 5 | |
| Ref-SiC 90/94 (SiC) | Mehl | 10 | 0,310 |
| | | 100 | |

| Bindemittel | | Menge % | Bindemittel [g] |
|---|---|---|---|
| Sol-Gel-Bond Levasil (Kieselsol) | | 4 | 124 |

Anmerkung: Die Tabelle dient nur zur Illustration der Erfindung.

Der FSM-Stein wurde bei 150°C getrocknet bis auf eine Restfeuchte von 1 Gew.-%.

Die Matrix des FSM-Steins zeigt ein Stützgerüst aus relativ groben Olivinkörnern 1 (dunkle Körner) und kleineren MgO-Körnern 2 (weiß). Die feinen und feinsten Körner aus MgO sind nicht sichtbar. Das gräuliche Matrixmaterial 3 weist im Wesentlichen die feinen Körnchen des SiC und die Kieselsäurepartikel des Kieselsols auf.

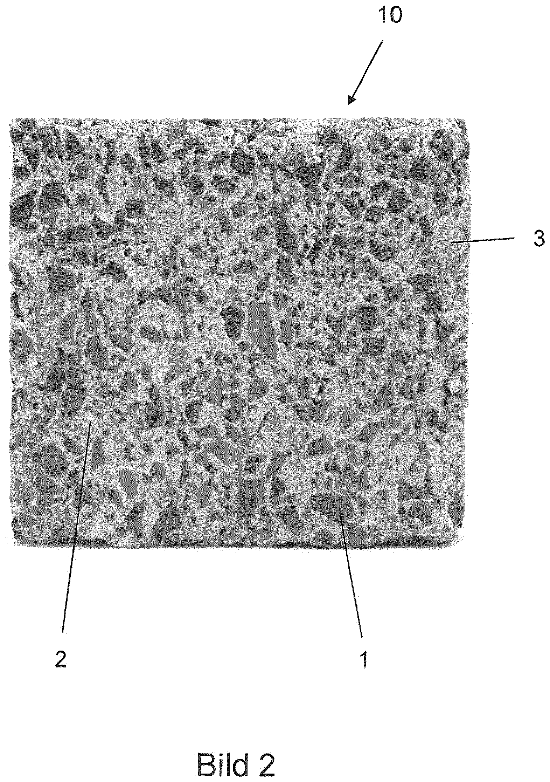

Bild 2 zeigt einen aus demselben Versatz hergestellten gebrannten, diagonal aufgesägten FSM-Stein. Die Matrix hat sich im Vergleich zur Matrix gemäß Bild 1 nicht wesentlich verändert, weshalb die gleichen Bezugszeichen die gleichen Bestandteile markieren. Die Brennbedingungen wurden, wie oben bereits angegeben, erfindungsgemäß so gewählt, dass die Gemengebestandteile des Versatzes während des Brennens nur unbeachtlich miteinander reagiert haben.

Die Überlegenheit des erfindungsgemäßen feuerfesten Erzeugnisses gegenüber einem bisher zum gleichen Zweck eingesetzten Magnesiachromitstein ergibt sich aus den folgenden Tiegeltests nach DIN 51069.

Es wurde eine fayalitische Schlacke aus einem Kupfer schmelzenden PS-Konverter mit dem folgendem Mineralphasenbestand verwendet:
Fayalit Fe₂SiO₄
Hedenbergit CaFe(Si₂O₆)
Magnetit Fe₃O₄
Mischspinell

Die chemische Zusammensetzung der Schlacke war die folgende:

| | |
|---|---|
| SiO₂: | 23.58 |
| Al₂O₃: | 3.63 |
| Fe₂O₃: | 60.76 |
| Cr₂O₃: | 0.26 |
| TiO₂: | 0.22 |
| CaO: | 1.58 |
| MgO: | 1.06 |
| SO₃: | 0.21 |
| NiO: | 0.22 |
| CuO: | 3.28 |
| ZnO: | 4.38 |
| PbO: | 0.47 |

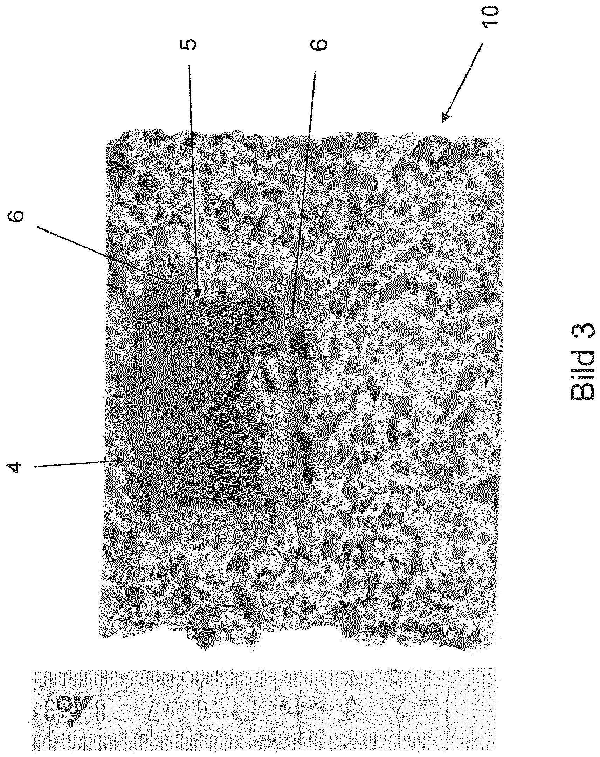

Die Schlacke wurde als Pulver in eine Ausnehmung bzw. einen Tiegel 4 eines für einen Tiegeltest vorbereiteten ungebrannten FSM-Steins 10 gegeben, auf 1350°C erhitzt und 6 Std. bei dieser Temperatur gehalten. Nach Erkalten wurde der Tiegel diagonal aufgesägt. Das Ergebnis zeigt Bild 3 des diagonal aufgesägten Steins. Die geschmolzene Schlacke 6 ist kaum in den Stein eingedrungen. Auch die Korrosion des FSM-Steins ist gering, wie an den noch scharfen Konturen 5 des Tiegels 4 erkennbar ist.

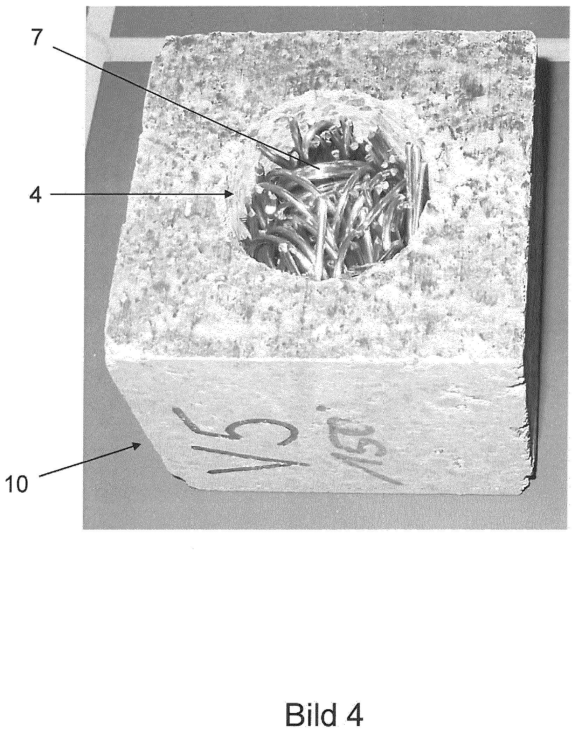

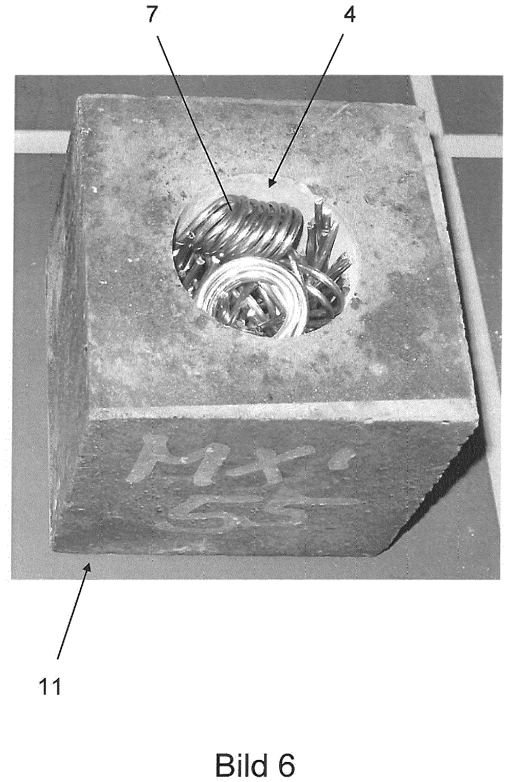

In einem weiteren Versuch wurde das Verhalten gegenüber Kupferschmelzen untersucht. Dazu wurden 75 g Kupferdraht 7 in einen aus einem ungebrannten FSM-Stein 10 hergestellten Tiegel 4 gefüllt (Bild 4) und für 6 Std. auf 1350°C erhitzt. Als Vergleich (Bild 6) wurde ein direkt gebundener Mg-Cr-Stein 11 (28% Cr₂O₃, Basis Schmelzmagnesia) genauso behandelt.

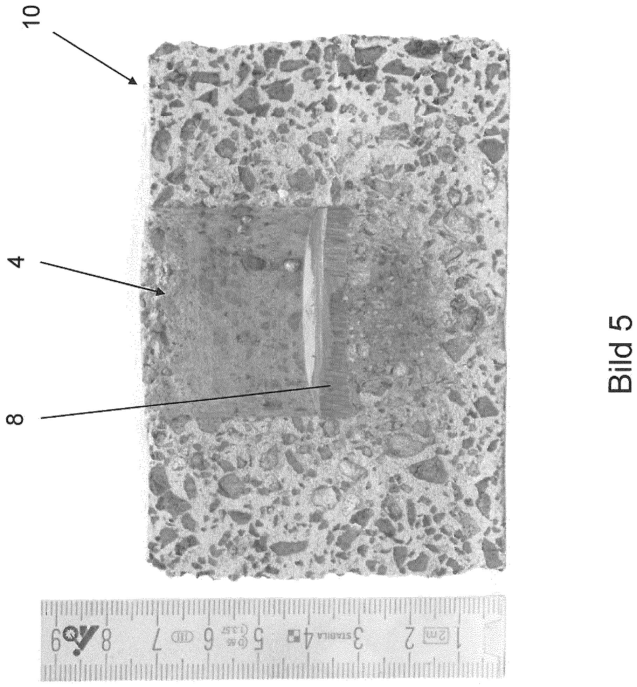

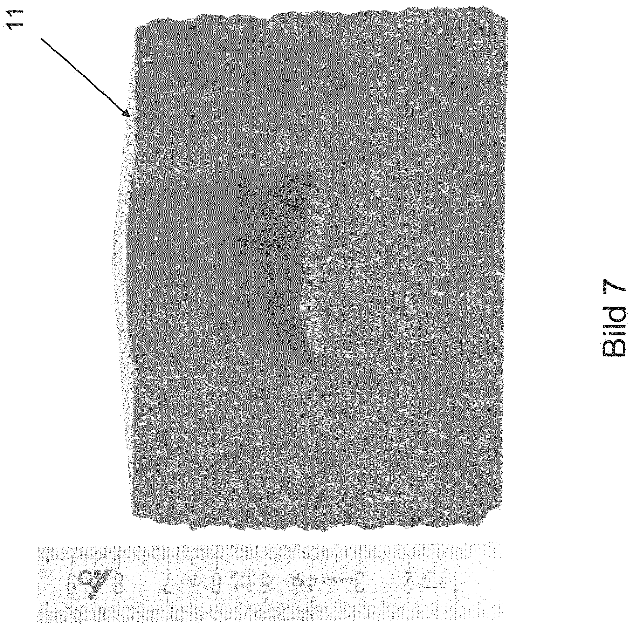

Nach dem Abkühlen und diagonalem Aufsägen der Tiegel 4 zeigte sich, dass Kupferschmelze im Tiegel 4 des Mg-Cr-Steins nicht mehr vorhanden war (Bild 7). Dieses Verhalten ist bekannt und ergibt in der Praxis, dass die Mg-Cr-Steine durch die veränderten thermomechanischen Eigenschaften des infiltrierten Teils abplatzen und dadurch relativ schnell verschleißen. Im Tiegel 4 aus dem FSM-Stein 10 ist hingegen noch die vollständige erstarrte Kupferschmelze 8 zu finden. Es ist fast nichts in den Stein eingedrungen. (Bild 5)

Der FSM-Stein weist daher gegenüber dem Mg-Cr-Stein insbesondere in einem PS-Konverter folgende Vorteile auf:
- herstellungstechnisch: der Stein muss nicht gebrannt, sondern nur getrocknet werden, so dass er handhabbar und einbaufähig ist. Dadurch ist der Stein billiger und umweltschonender zu produzieren.
- anwendungstechnisch: der FSM-Stein wird von Kupferschmelzen nicht und von Fayalitschlacke nur in geringem Umfang penetriert und verschleißt daher aufgrund seiner höheren thermomechanischen Beständigkeit langsamer als ein Mg-Cr-Stein.

Die erfindungsgemäßen Erzeugnisse eignen sich speziell für den Einsatz in PS-Konvertern für die Kupfererzeugung, sind aber auch mit Vorteilen gegenüber den üblichen feuerfesten Erzeugnissen in anderen Anwendungen, bei denen fayalitische Schlacken und dünnflüssige Buntmetallschmelzen auftreten wie das praktisch in der gesamten Buntmetallindustrie der Fall ist, mit den beschriebenen Vorteilen verwendbar.

Das erfindungsgemäße Konzept beruht darauf, dass basierend auf Olivingrobkorn sowie SiC- und MgO Feinkorn sich das Gleichgewicht im Stein zwischen den Reaktionsstoffen aus dem Stein und der Schlacke erst bei Prozesstemperaturen z.B. zwischen 1200 und 1350°C einstellt. Bei diesen Temperaturen ist SiC trotz oxidierender Prozessbedingungen bezüglich Antiwettingwirkung noch voll wirksam. MgO reagiert mit der Bindungskomponente zu Si-Gel (gelierte Bindemittelkomponente des Kieselsols) (Nanobond) sowie dem ggf. entstehenden Oxidationsprodukt des SiC zu weiterem Forsterit. MgO wird erfindungsgemäß im stöchiometrischen Überschuss zu für eine Reaktion verfügbarem SiO₂ gewählt, um die Bildung von Enstatit, das nicht feuerfest ist, zu vermeiden. Diese Reaktionen in situ versiegeln den Stein unmittelbar feuerseitig und behindern die Penetration durch die sehr dünnflüssige Metallschmelze, z.B. Kupferschmelze. Das SiC wirkt zudem als Schlackenbremse. In Kontakt mit den allgegenwärtigen Fayalitschlacken reagiert außerdem das überschüssige MgO zusammen mit dem Forsterit zu Olivin-Mischkristallen. Die Liquidus-Temperatur steigt dadurch an, d.h. das Reaktionsprodukt Schlacke-Stein friert auf bzw. führt zu einem Ansteifen der Schlacke und die Korrosionsreaktion wird gestoppt oder zumindest jedoch stark reduziert.

Demgemäß weist ein erfindungsgemäßer Versatz zumindest folgende Zusammensetzungen auf:
- mindestens 30 Gew.-%, insbesondere mindestens 40 Gew.-% eines grobkörnigen Olivinrohstoffs, enthaltend Forsteritgehalte von z.B. mindestens 70 Gew.-%, insbesondere von mindestens 90 Gew.-%, vorzugsweise von mindestens 100 Gew.-% und aufweisend Korngrößen von über 0,1 mm,
- mindestens 35 Gew.-%, insbesondere mindestens 40 Gew.-% Magnesia (MgO) in Mehlform mit Korngrößen ≤ 1 mm,
- mindestens 5 Gew.-%, insbesondere mindestens 10 Gew.-% Siliciumcarbid (SiC) in Mehlform mit Korngrößen ≤ 1 mm,
- optional maximal 10 Gew.-%, insbesondere maximal 5 Gew.-% einer trockenen feinteiligen Kieselsäure (SiO₂), vorzugsweise in Form von Mikrosilika und/oder einer pyrogenen und/oder gefällten Kieselsäure,
- optional maximal 10 Gew.-%, insbesondere maximal 5 Gew.-%, mindestens eines weiteren Zusatzmittels für feuerfeste Erzeugnisse wie Antioxidantien,
- Rest auf 100 Gew.-% jeweils mindestens einen der anderen Feststoffe
   zudem
- mindestens 2 Gew.-% eines flüssigen Bindemittels in Form eines alkaliarmen, vorzugsweise alkalifreien Kieseslsols, berechnet auf die trockenen Feststoffe.

## Patentansprüche

1. Trockenes Gemisch für einen, insbesondere für die Auskleidung von Buntmetall-Schmelzaggregaten, vorzugsweise für die Auskleidung von Kupferschmelzkonvertern verwendbaren feuerfesten Versatz bestehend aus
- mindestens 30 Gew.-% eines grobkörnigen Olivinrohstoffs aufweisend Korngrößen von 100 Gew.-% über 0,1 mm,
- mindestens 35 Gew.-% Magnesia in Mehlform mit Korngrößen von 100 Gew.-% ≤ 1 mm,
- mindestens 5 Gew.-% Siliciumcarbid in Mehlform mit Korngrößen von 100 Gew.-% ≤ 1 mm,
- optional maximal 10 Gew.-% einer trockenen feinteiligen Kieselsäure,
- optional maximal 10 Gew.-% mindestens eines weiteren Zusatzmittels für feuerfeste Erzeugnisse,
- Rest auf 100 Gew.-% jeweils mindestens einem der anderen Feststoffe.

2. Trockenes Gemisch nach Anspruch 1 enthaltend maximal 10 Gew.-% der trockenen feinteiligen Kieselsäure in Form von Mikrosilika und/oder einer pyrogenen und/oder gefällten Kieselsäure.

3. Trockenes Gemisch nach Anspruch 1 oder 2, enthaltend die folgenden Feststoffe im Mengenverhältnis:
| | |
|---|---|
| Olivinrohstoff: | 30 bis 60, insbesondere 40 bis 50 Gew.-% |
| Magnesia: | 35 bis 50, insbesondere 40 bis 45 Gew.-% |
| Siliciumcarbid: | 5 bis 20, insbesondere 10 bis 15 Gew.-% |
| Kieselsäure: | 0 bis 10, insbesondere 0 bis 5 Gew.-% |
| Feuerfeste Zusatzmittel: | 0 bis 10, insbesondere 0 bis 5 Gew.-%. |

4. Trockenes Gemisch nach einem oder mehreren der vorhergehenden Ansprüche,
wobei der Olivinrohstoff ein natürlicher Olivinrohstoff und/oder ein synthetisch hergestellter Forsteritwerkstoff ist und die Korngröße des Olivinrohstoffs im Grobkornbereich zwischen 0,1 und 6, insbesondere zwischen 1 und 6 mm liegt und vorzugsweise eine Gaußsche Kornverteilung aufweist.

5. Trockenes Gemisch nach einem oder mehreren der vorhergehenden Ansprüche,
wobei der MgO-Gehalt der Magnesia über 90 Gew.-%, insbesondere über 95 Gew.-% liegt und die Kornverteilung des Magnesiamehls einer Gaußschen Kornverteilung entspricht.

6. Trockenes Gemisch nach einem oder mehreren der vorhergehenden Ansprüche,
wobei das Siliciumcarbidmehl eine Reinheit von über 90 Gew.-%, insbesondere über 94 Gew.-% an SiC aufweist.

7. Trockenes Gemisch nach einem oder mehreren der vorhergehenden Ansprüche, enthaltend mindestens 40 Gew.-% des grobkörnigen Olivinrohstoffs.

8. Trockenes Gemisch nach einem oder mehreren der vorhergehenden Ansprüche, enthaltend einen körnigen Olivinrohstoff mit Forsteritgehalten von mindestens 70 Gew.-%, insbesondere von mindestens 90 Gew.-%, vorzugsweise von 100 Gew.-%.

9. Trockenes Gemisch nach einem oder mehreren der vorhergehenden Ansprüche,
wobei mindestens 40 Gew.-% Magnesia in Mehlform enthalten sind.

10. Trockenes Gemisch nach einem oder mehreren der vorhergehenden Ansprüche,
wobei Siliciumcarbid mit mindestens 10 Gew.-% enthalten ist.

11. Trockenes Gemisch nach einem oder mehreren der vorhergehenden Ansprüche,
wobei die trockene feinteilige Kieselsäure maximal mit 5 Gew.-% enthalten ist.

12. Trockenes Gemisch nach einem oder mehreren der vorhergehenden Ansprüche,
wobei das weitere Zusatzmittel mit maximal 5 Gew.-% enthalten ist und vorzugsweise ein Antioxidant ist.

13. Feuerfester Versatz enthaltend über 90 Gew.-% ein trockenes Gemisch nach einem oder mehreren der vorhergehenden Ansprüche,
wobei der Versatz zu dem trockenen Gemisch mindestens 2 Gew.-% eines flüssigen Bindemittels in Form eines alkaliarmen, vorzugsweise alkalifreien Kieselsols berechnet auf die trockenen Feststoffe enthält.

14. Versatz nach Anspruch 13,
wobei der Alkaligehalt des Kieselsols unter 1 Gew.-%, insbesondere unter 0,5 Gew.-% liegt.

15. Versatz nach Anspruch 13 und/oder 14,
wobei das Kieselsol eine kolloide Dispersion aus amorphen Siliciumdioxidpartikeln in Wasser ist und SiO₂-Konzentrationen zwischen 15 und 50, insbesondere zwischen 20 und 40 Gew.-% aufweist, wobei vorzugsweise die spezifische Oberfläche der Siliciumdioxidpartikel zwischen 100 und 400, insbesondere zwischen 200 und 300 m²/g liegt.

16. Versatz nach einem oder mehreren der Ansprüche 13 bis 15,
wobei das Kieselsol in Mengen zwischen 2 und 10, insbesondere zwischen 3 und 6 Gew.-%, berechnet auf die trockenen Feststoffe, vorliegt.

17. Versatz nach einem oder mehreren der Ansprüche 13 bis 16,
wobei der Versatz in einem Gebinde aufgeteilt angeordnet ist mit mindestens zwei Behältnissen, wobei in einem Behältnis die trockenen Feststoffe und in dem anderen Behältnis das Kieselsol untergebracht sind.

18. Verfahren zur Herstellung von Formsteinen unter Verwendung eines Versatzes nach einem oder mehreren der Ansprüche 13 bis 17,
wobei die Versatzbestandteile zu einer wässrigen Masse gemischt und anschließend die Masse in einer Formpresse zu Formsteinen gepresst wird und anschließend die Formsteine getrocknet werden, insbesondere bis zu einer maximalen Restfeuchte von 2 Gew.-%.

19. Verfahren nach Anspruch 18,
wobei die getrockneten Formsteine in einem keramischen Brennofen keramisch gebrannt werden, insbesondere bei Temperaturen zwischen 1000 und 1300°C, insbesondere zwischen 1150 und 1250°C in oxidierender Atmosphäre, mit einer Brenndauer zwischen 4 und 8 Stunden, insbesondere zwischen 5 und 6 Stunden.

20. Formstein hergestellt nach Anspruch 18,
aufweisend eine Rohdichte zwischen 2,6 und 2,7 kg/m³ und eine Druckfestigkeit von 25 bis 50 MPa, insbesondere von 35 bis 45 MPa.

21. Formstein hergestellt nach Anspruch 19,
aufweisend eine Rohdichte von 2,55 bis 2,65 kg/m³ und eine Druckfestigkeit von 30 bis 55 MPa, insbesondere von 40 bis 50 MPa.

22. Verwendung eines Versatzes nach einem oder mehreren der Ansprüche 13 bis 17 zur Herstellung einer feuerfesten Gießmasse oder einer feuerfesten Vibrationsmasse, wobei die Bildsamkeit der Masse mit zusätzlichem Wasser entsprechend eingestellt wird, sofern der Wassergehalt des Kieselsols dazu nicht ausreicht.

## Claims

1. A dry mix for a refractory batch, which may be used in particular for lining non-ferrous metal smelting units, preferably for lining copper smelting converters, consisting of
- at least 30 wt% of a coarse-grained olivine raw material whereof 100 wt% has grain sizes greater than 0.1 mm,
- at least 35 wt% magnesia in flour form whereof 100 wt% has grain sizes ≤ 1 mm,
- at least 5 wt% silicon carbide in flour form whereof 100 wt% has grain sizes ≤ 1 mm,
- optionally a maximum of 10 wt% of a dry fine-particle silica,
- optionally a maximum of 10 wt% of at least one further additive for refractory products,
- remainder up to 100 wt% in each case of at least one of the other solids.

2. The dry mix according to Claim 1, containing a maximum of 10 wt% of the dry fine-particle silica in the form of microsilica and/or a pyrogenic and/or precipitated silica.

3. The dry mix according to Claim 1 or 2, containing the following solids in the proportions:
| | |
|---|---|
| olivine raw material: | 30 to 60 wt%, in particular 40 to 50 wt% |
| magnesia: | 35 to 50 wt%, in particular 40 to 45 wt% |
| silicon carbide: | 5 to 20 wt%, in particular 10 to 15 wt% |
| silica: | 0 to 10 wt%, in particular 0 to 5 wt% |
| refractory additives: | 0 to 10 wt%, in particular 0 to 5 wt%. |

4. The dry mix according to one or more of the preceding claims,
wherein the olivine raw material is a natural olivine raw material and/or a synthetically produced forsterite material and the grain size of the olivine raw material is in the coarse-grain range between 0.1 and 6 mm, in particular between 1 and 6 mm, and preferably has a Gaussian grain distribution.

5. The dry mix according to one or more of the preceding claims,
wherein the MgO content of the magnesia is greater than 90 wt%, in particular greater than 95 wt%, and the grain distribution of the magnesia flour corresponds to a Gaussian grain distribution.

6. The dry mix according to one or more of the preceding claims,
wherein the silicon carbide flour has a purity of greater than 90 wt%, in particular greater than 94 wt%, of SiC.

7. The dry mix according to one or more of the preceding claims, containing at least 40 wt% of the coarse-grained olivine raw material.

8. The dry mix according to one or more of the preceding claims, containing a granular olivine raw material with forsterite contents of at least 70 wt%, in particular at least 90 wt%, preferably 100 wt%.

9. The dry mix according to one or more of the preceding claims,
wherein the content of magnesia in flour form is at least 40 wt%.

10. The dry mix according to one or more of the preceding claims,
wherein the silicon carbide content is at least 10 wt%.

11. The dry mix according to one or more of the preceding claims,
wherein the dry fine-particle silica content is a maximum of 5 wt%.

12. The dry mix according to one or more of the preceding claims,
wherein the further additive content is a maximum of 5 wt% and the further additive is preferably an antioxidant.

13. A refractory batch containing greater than 90 wt% of a dry mix according to one or more of the preceding claims,
wherein the batch contains, in addition to the dry mix, at least 2 wt% of a liquid binder in the form of a low-alkali, preferably alkali-free, silica sol calculated on the basis of the dry solids.

14. The batch according to Claim 13,
wherein the alkali content of the silica sol is below 1 wt%, in particular below 0.5 wt%

15. The batch according to Claim 13 and/or 14,
wherein the silica sol is a colloid dispersion of amorphous silicon dioxide particles in water and has SiO₂ concentrations between 15 and 50 wt%, in particular between 20 and 40 wt%, wherein the specific surface area of the silicon dioxide particles is preferably between 100 and 400 m²/g, in particular between 200 and 300 m²/g.

16. The batch according to one or more of Claims 13 to 15,
wherein the silica sol is present in quantities between 2 and 10 wt%, in particular between 3 and 6 wt%, calculated on the basis of the dry solids.

17. The batch according to one or more of Claims 13 to 16,
wherein the batch is arranged subdivided in a container having at least two receptacles, wherein the dry solids are accommodated in one receptacle and the silica sol is accommodated in the other receptacle.

18. A method for producing moulded bricks using a batch according to one or more of Claims 13 to 17,
wherein the batch constituents are mixed to form an aqueous compound and the compound is subsequently pressed in a moulding press to form moulded bricks and the moulded bricks are subsequently dried, in particular to a maximum residual moisture of 2 wt%.

19. The method according to Claim 18,
wherein the dried moulded bricks are ceramically fired in a ceramic furnace, in particular at temperatures between 1000 and 1300ºC, in particular between 1150 and 1250ºC, in an oxidising atmosphere, with a firing time of between 4 and 8 hours, in particular between 5 and 6 hours.

20. A moulded brick produced according to Claim 18,
having a raw density between 2.6 and 2.7 kg/m³ and a compressive strength of 25 to 50 MPa, in particular 35 to 45 MPa.

21. The moulded brick produced according to Claim 19,
having a raw density of 2.55 to 2.65 kg/m³ and a compressive strength of 30 to 55 MPa, in particular 40 to 50 Mpa.

22. The use of a batch according to one or more of Claims 13 to 17 for producing a refractory casting compound or a refractory vibratory compound, wherein the ductility of the compound is adjusted accordingly with additional water if the water content of the silica sol is not sufficient for this.

## Revendications

1. Mélange sec pour une composition réfractaire utilisable en particulier pour le revêtement de fours de fusion de métal non ferreux, de préférence pour le revêtement de convertisseurs de fusion de cuivre, consistant en
- au moins 30 % en poids d'une olivine brute grossière présentant une granulométrie de 100 % en poids supérieure à 0,1 mm,
- au moins 35 % en poids de magnésie sous forme de farine avec une granulométrie de 100 % en poids ≤ 1 mm,
- au moins 5 % en poids de carbure de silicium sous forme de farine avec une granulométrie de 100 % en poids ≤ 1 mm,
- facultativement, au maximum 10 % en poids d'acide silicique sec à particules fines,
- facultativement, au maximum 10 % en poids d'au moins un autre adjuvant pour produits réfractaires,
- le reste à 100 % en poids étant respectivement au moins l'un des autres solides.

2. Mélange sec selon la revendication 1 contenant au maximum 10 % en poids de l'acide silicique sec à fines particules sous la forme de microsilice et/ou d'un acide silicique pyrogène et/ou précipité.

3. Mélange sec selon la revendication 1 ou 2, contenant les solides suivants en proportions :
| | |
|---|---|
| olivine brute : | 30 à 60, en particulier 40 à 50 % en poids, |
| magnésie : | 35 à 50, en particulier 40 à 45 % en poids, |
| carbure de silicium : | 5 à 20, en particulier 10 à 15 % en poids, |
| acide silicique : | 0 à 10, en particulier 0 à 5 % en poids, |
| additif réfractaire : | 0 à 10, en particulier 0 à 5 % en poids. |

4. Mélange sec selon une ou plusieurs des revendications précédentes,
dans lequel l'olivine brute est une olivine brute naturelle et/ou un matériau de forstérite produit de façon synthétique et la granulométrie de l'olivine brute se situe dans une plage granulométrique comprise entre 0,1 et 6, en particulier entre 1 et 6 mm et présente de préférence une répartition gaussienne des grains.

5. Mélange sec selon une ou plusieurs des revendications précédentes,
dans lequel la teneur en MgO de la magnésie est supérieure à 90 % en poids, en particulier supérieure à 95 % en poids et la répartition des grains de la farine de magnésie correspond à une répartition gaussienne des grains.

6. Mélange sec selon une ou plusieurs des revendications précédentes,
dans lequel la farine de carbure de silicium présente une pureté supérieure à 90 % en poids, en particulier supérieure à 94 % en poids de SiC.

7. Mélange sec selon une ou plusieurs des revendications précédentes, contenant au moins 40 % en poids de l'olivine brute grossière.

8. Mélange sec selon une ou plusieurs des revendications précédentes, contenant une olivine brute granuleuse avec des teneurs en forstérite d'au moins 70 % en poids, en particulier d'au moins 90 % en poids, de préférence de 100 % en poids.

9. Mélange sec selon une ou plusieurs des revendications précédentes,
dans lequel au moins 40 % en poids de magnésie sont contenus sous forme de farine.

10. Mélange sec selon une ou plusieurs des revendications précédentes,
dans lequel du carbure de silicium est contenu à hauteur d'au moins 10 % en poids.

11. Mélange sec selon une ou plusieurs des revendications précédentes,
dans lequel l'acide silicique sec à fines particules est contenu au maximum à hauteur de 5 % en poids.

12. Mélange sec selon une ou plusieurs des revendications précédentes,
dans lequel l'autre additif est contenu au maximum à hauteur de 5 % en poids et est de préférence un antioxydant.

13. Composition réfractaire contenant à plus de 90 % en poids un mélange sec selon l'une ou plusieurs des revendications précédentes,
dans laquelle la composition du mélange sec contient au moins 2 % en poids d'un liant fluide sous la forme d'un sol de silice pauvre en agents alcalins, de préférence sans agent alcalin, calculé sur la base des solides secs.

14. Composition selon la revendication 13,
dans laquelle la teneur en agents alcalins du sol de silice est inférieure à 1 % en poids, en particulier inférieure à 0,5 % en poids.

15. Composition selon la revendication 13 et/ou 14,
dans laquelle le sol de silice est une dispersion colloïde de particules d'oxyde de silicium amorphe dans de l'eau et présente des concentrations de SiO₂ comprises entre 15 et 50, en particulier entre 20 et 40 % en poids, dans laquelle de préférence la surface spécifique des particules de dioxyde de silicium se situe entre 100 et 400, en particulier entre 200 et 300 m²/g.

16. Composition selon une ou plusieurs des revendications 13 à 15,
dans laquelle le sol de silice se présente en une quantité comprise entre 2 et 10, en particulier entre 3 et 6 % en poids, calculé sur la base des solides secs.

17. Composition selon une ou plusieurs des revendications 13 à 16,
dans laquelle la composition est disposée de façon répartie dans un emballage comportant au moins deux contenants, dans laquelle dans un contenant se trouvent les solides secs et dans l'autre contenant se trouve le sol de silice.

18. Procédé de production de blocs moulés en utilisant une composition selon une ou plusieurs des revendications 13 à 17,
dans lequel les composants de la composition sont mélangés en une masse aqueuse et ensuite, la masse est comprimée dans une presse de moulage pour donner des blocs moulés et ensuite, les blocs moulés sont séchés, en particulier jusqu'à une humidité résiduelle maximale de 2 % en poids.

19. Procédé selon la revendication 18,
dans lequel les blocs moulés séchés sont cuits selon une cuisson céramique dans un four à céramique, en particulier à des températures comprises entre 1 000 et 1 300 °C, en particulier entre 1 150 et 1 250 °C sous une atmosphère oxydante, avec une durée de cuisson comprise entre 4 et 8 heures, en particulier entre 5 et 6 heures.

20. Bloc moulé produit selon la revendication 18,
présentant une masse volumique apparente comprise entre 2,6 et 2,7 kg/m³ et une résistance à la compression de 25 à 50 MPa, en particulier de 35 à 45 MPa.

21. Bloc moulé produit selon la revendication 19,
présentant une masse volumique apparente de 2,55 à 2,65 kg/m³ et une résistance à la compression de 30 à 55 MPa, en particulier de 40 à 50 MPa.

22. Utilisation d'une composition selon une ou plusieurs des revendications 13 à 17 pour la production d'une masse de coulée réfractaire ou d'une masse vibrée réfractaire, dans laquelle la plasticité de la masse est ajustée en conséquence avec de l'eau supplémentaire, dans la mesure où la teneur en eau du sol de silice n'est pas suffisante à cet égard.
